# EUROPÄISCHE PATENTSCHRIFT

(11) **EP 0 952 907 B1**
(45) Veröffentlichungstag und Bekanntmachung des Hinweises auf die Patenterteilung: **12.03.2003**
(21) Anmeldenummer: 98955484.5
(22) Anmeldetag: 20.10.1998
(51) Int. Cl.: B29C 39/14

(54) **VERFAHREN UND VORRICHTUNG ZUR HERSTELLUNG EINES FOLIENMATERIALS**
METHOD AND DEVICE FOR PRODUCING A FOIL MATERIAL
PROCEDE ET DISPOSITIF DE PRODUCTION D'UN MATERIAU SOUS FORME DE FEUILLE

(30) Priorität: 20.10.1997 DE 19746268
(43) Veröffentlichungstag der Anmeldung: 03.11.1999
(73) Patentinhaber: Giesecke & Devrient GmbH, 81677 München (DE)
(72) Erfinder: KAULE, Wittich, D-82275 Emmering (DE); GRAUVOGL, Gregor, D-81479 München (DE)
(74) Vertreter: Klunker . Schmitt-Nilson . Hirsch
(86) Internationale Anmeldenummer: EP9806617
(87) Internationale Veröffentlichungsnummer: WO99020447

(56) Entgegenhaltungen:
- EP-A- 0 686 509
- WO-A-91/17050
- WO-A-94/15752
- WO-A-96/00255
- WO-A-98/30361
- US-A- 4 552 165

## Beschreibung

Die Erfindung betrifft ein Verfahren zur Herstellung eines Folienmaterials, bei welchem eine Kunststofffolie mit einer Lackschicht versehen wird, die eine variable Viskosität aufweist, und bei welchem anschließend in die Lackschicht eine Reliefstruktur eingeprägt wird. Die Erfindung betrifft ferner eine Vorrichtung zur Herstellung eines Folienmaterials, welche zumindest eine Einrichtung zum Aufbringen einer Lackschicht variabler Viskosität auf eine Kunststofffolie sowie eine Einrichtung zum Prägen der Lackschicht aufweist.

Optisch variable Elemente, wie Hologramme, Beugungsgitter etc. werden aufgrund ihrer mit dem Betrachtungswinkel variierenden optischen Eigenschaften seit langem als Fälschungs- bzw. Kopierschutzelemente verwendet. Für die Massenherstellung derartiger Elemente ist es üblich, sogenannte "Master" herzustellen, welche die jeweiligen Phaseninformationen in Form einer räumlichen Reliefstruktur aufweisen. Ausgehend von diesem Master werden durch Vervielfältigung sogenannte "Prägestempel" erzeugt, mit deren Hilfe die Beugungsstrukturen in großer Stückzahl in eine Lackschicht eingeprägt werden können. Derartige Prägehologramme werden üblicherweise auf einem separaten Träger vorbereitet und mittels einer Klebstoffschicht auf den endgültigen, gegen Verfälschung zu schützenden Gegenstand, wie z.B. Dokumente, Pässe, Kreditkarten, CDs, Bücher etc. übertragen. Die Trägerschicht kann nach dem Verkleben mit dem zu schützenden Gegenstand vom Schichtaufbau des Hologramms abgezogen werden.

Das Trägermaterial mit dem hierauf angeordneten Sicherheitselement wird häufig als Transferband bezeichnet und kann beispielsweise nach dem aus der US-A-4,758,296 bekannten Verfahren hergestellt werden. Hier wird eine auf Rollen umlaufende, bahnförmige Prägematrize mit einem flüssigen Harz versehen und mit einem Kunststoffträgermaterial in Kontakt gebracht. Während des Kontakts wird das flüssige Harz mittels UV- oder Elektronenstrahl gehärtet. In einem weiteren Schritt wird die Reliefstruktur mit einer dünnen Metallschicht versehen, so dass die in den Beugungsstrukturen enthaltene Information in Reflexion sichtbar wird. Für den Transfer der Beugungsstrukturen auf ein Sicherheitsdokument wird der Schichtaufbau schließlich mit einer Heißschmelzkleberschicht versehen, die unter Einwirkung von Wärme und Druck aktiviert wird.

Es hat sich jedoch gezeigt, dass Transferbänder häufig Fehlstellen aufweisen, d.h. Stellen, in welchen kein Prägelack vorhanden ist, oder die Prägung nur unzureichend in den Lack übertragen wurde, so dass die Brillanz des Beugungseffekts stark eingeschränkt ist.

Der Erfindung liegt nun die Aufgabe zugrunde, ein Verfahren und eine Vorrichtung zu schaffen, das bzw. die es ermöglicht, Transferbänder ohne Fehlstellen zu erzeugen.

Die Lösung dieser Aufgabe ergibt sich aus den unabhängigen Ansprüchen. Weiterbildungen sind Gegenstand der Unteransprüche.

Die Erfindung beruht auf der Erkenntnis, dass die verschiedenen Verfahrensschritte während der Herstellung des Transferbandes unterschiedliche Anforderungen an die Viskosität des Prägelacks stellen, und daher für optimale Ergebnisse die Viskosität in jedem Verfahrensschritt eingestellt und während des gesamten Arbeitsganges konstant gehalten werden muss.

Wird der Prägelack beispielsweise im Siebdruck auf die Kunststofffolie aufgebracht, so muss die Viskosität je nach verwendetem Prägelack zwischen ca. 700 und 1500 mPas, im Flexodruck ca. 100 bis 500 mPas oder im Tiefdruck ca. 50 bis 150 mPas betragen, um eine gleichmäßige Schicht gewünschter Dicke auf die Folie übertragen zu können. Welches Druckverfahren verwendet wird, richtet sich nach der aufzubringenden Schichtdicke. Im Tiefdruck können Schichtdicken von ca. 0,5 µm bis ca. 3 µm, im Flexodruck von ca. 3 µm bis ca. 6 µm und im Siebdruck von ca. 6 µm bis ca. 12 µm erzeugt werden. Da der Lack bei Druckvorgängen nur in Form eines Rasters aufgebracht wird, muss anschließend dafür gesorgt werden, dass sich der Lack gleichmäßig über die Oberfläche der Kunststofffolie verteilt. Für diesen Arbeitsgang sollte der Lack möglichst dünnflüssig sein; beim Prägevorgang dagegen ist ein etwas zähflüssigerer Lack von Vorteil. Bisher wurde daher die chemische Zusammensetzung des Lacks und damit seine Viskosität so gewählt, dass er allen Anforderungen weitgehend gerecht wurde. Hierbei musste in Kauf genommen werden, dass der Lack aufgrund schwankender Betriebstemperaturen nicht die optimale Viskosität für den jeweiligen Bearbeitungsvorgang aufwies und daher Fehlstellen im fertigen Produkt auftraten.

Gemäß der Erfindung wird in jedem Arbeitsgang die Viskosität des Lacks über eine Steuereinheit kontrolliert und auf den für den jeweiligen Arbeitsgang optimalen Wert eingestellt. Sofern Lacke mit einer temperaturabhängigen Viskosität verwendet werden, kann diese Steuereinheit aus einem Temperaturfühler und einem Heiz- bzw. Kühlaggregat bestehen. Der Temperaturfühler misst kontinuierlich oder in gewissen Abständen die Temperatur des Prägelacks und gibt das Ergebnis an eine Regeleinheit weiter, welche abhängig von der gemessenen Temperatur das Heiz- oder Kühlaggregat steuert. Dabei kann das Heiz- oder Kühlaggregat kontinuierlich in Betrieb sein, so dass die Regeleinheit lediglich für eine Leistungserhöhung bzw.-erniedrigung sorgt oder die Regeleinheit veranlasst ein Ein- bzw. Ausschalten des Aggregats.

Weitere Vorteile und Ausführungsformen der Erfindung werden anhand der Figuren erläutert.

Es zeigen:
- Fig. 1: Ausführungsform einer erfindungsgemäßen Vorrichtung,
- Fig. 2: weitere Ausführungsform der erfindungsgemäßen Vorrichtung,
- Fig. 3a, 3b: Varianten der erfindungsgemäßen Vorrichtung,
- Fig. 4: Viskositätskurven zweier unterschiedlicher Prägelacke in Abhängigkeit von der Temperatur.

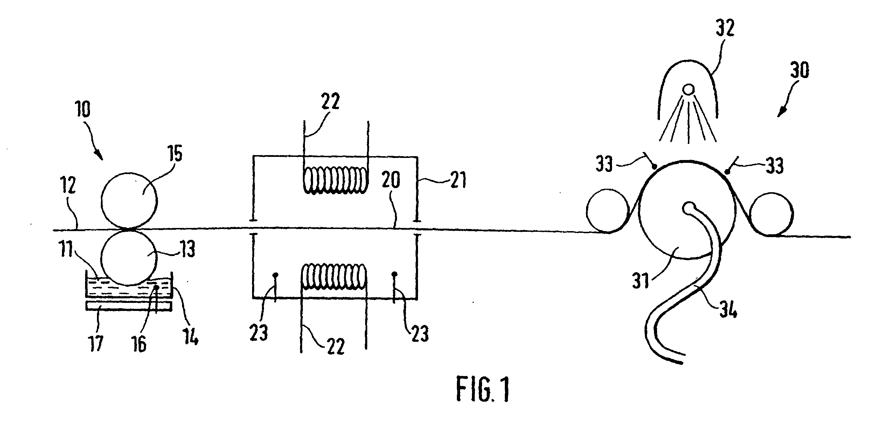

Fig. 1 zeigt die erfindungswesentlichen Einrichtungen der erfindungsgemäßen Vorrichtung für die Herstellung eines Folienmaterials. Sie weist eine Einrichtung 10 zum Aufbringen einer Lackschicht 11 auf eine Kunststofffolie 12, eine Verfließstrecke 20 sowie eine Einrichtung 30 zum Prägen der Lackschicht 11 auf. Die Vorrichtung kann darüber hinaus weitere Einrichtungen aufweisen, wie z.B. eine Einrichtung zum Metallisieren der geprägten Lackoberfläche.

Bei der in Fig. 1 gezeigten Einrichtung 10 zum Aufbringen der Lackschicht 11 handelt es sich um ein Tiefdruckwerk. Die Druckwalze 13 weist hier eine in Form von Näpfchen unterschiedlicher Tiefe gravierte Manteloberfläche auf. Beim Durchlauf durch die Farbwanne 14 nehmen diese Näpfchen die Farbe bzw. den Lack auf, der anschließend im Bereich der Gegendruckwalze 15 auf die Folie 12 übertragen wird. Die Farbwanne 14 weist einen Temperaturfühler 16 auf, der die Temperatur des Lacks 11 kontrolliert. Dieser Messfühler 16 ist über eine Regeleinheit mit einer Heizplatte 17 verbunden, welche bei Bedarf die Farbwanne 14 heizt. Die Verfließstrecke 20 bezeichnet eine Transportstrecke vorbestimmter Länge, die sich in einem geheizten Kasten 21 befindet. Das Heizaggregat wird hier durch die Heizspiralen 22 angedeutet. Auch entlang der Verfließstrecke 20 sind ein oder mehrere Temperaturmessfühler 23 angeordnet, welche die Temperatur des Lacks kontrollieren und die Messergebnisse an eine nicht gezeigte Regeleinheit weitergeben, welche die Temperatur des Kastens 21 reguliert. Die Einrichtung 30 zum Prägen der Lackschicht besteht vorzugsweise aus einer Prägewalze 31, deren Manteloberfläche das Negativ der zu übertragenden Reliefstruktur trägt. Diese Reliefstruktur kann beispielsweise eine Beugungsstruktur in Form eines Hologramms, Kinegramms oder dergleichen sein. Während des Kontakts der Prägewalze 31 mit dem Lack 11 muss der Lack zumindest soweit verfestigt werden, dass die Prägestruktur ohne zu verwischen identisch erhalten bleibt. Handelt es sich bei dem Lack beispielsweise um einen mit UV-Strahlung härtbaren Lack, so muss der Lack 11 im Bereich der Prägewalze durch Beaufschlagung mit UV-Strahlung gehärtet werden. Dies wird in der Fig. 1 durch die Lampe 32 angedeutet. Im Umschlingungsbereich zwischen Folie 12 und Prägewalze 31 befinden sich ein oder mehrere Temperaturmessfühler 33, die auch hier die Temperatur der Lackschicht 11 kontrollieren. Handelt es sich, wie in der dargestellten Ausführungsform angedeutet, um einen mit UV-Strahlung radikalisch härtbaren Lack 11, muß die Prägewalze üblicherweise mit Hilfe eines Kühlaggregats 34 gekühlt werden, um die optimale Viskosität zu erzielen. Hierbei kann es sich, wie in Fig. 1 angedeutet, beispielsweise um eine durch den Prägezylinder geleitete Kühlflüssigkeit handeln.

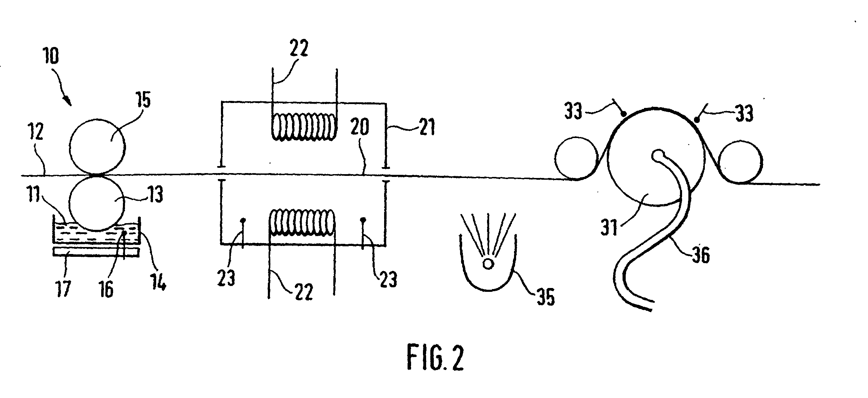

Wird dagegen ein kationisch härtbarer Lack verwendet, so muss der Härtungsprozess vor dem Prägevorgang beispielsweise mittels UV-Strahlung initiiert werden. Diesen Fall zeigt Fig. 2. Hier ist eine UV-Lampe 35 vor der Prägeeinrichtung 30 angeordnet. Da bei dieser Ausführungsform während des Prägevorgangs keine zusätzliche Wärme durch eine Strahlungsquelle zugeführt wird, muss die Prägewalze 31 in diesem Fall unter Umständen mit Hilfe eines Heizaggregats 36 geheizt werden. Hierbei kann es sich beispielsweise um eine durch die Prägewalze 31 geleitete Heizflüssigkeit handeln.

Bei den gezeigten Heiz- bzw. Kühlaggregaten handelt es sich lediglich um Beispiele. Es können auch beliebige andere Verfahren zur Temperierung eingesetzt werden, wie z. B. IR-Strahler und Heißluft- oder Kühlluftaggregate. Die den einzelnen Arbeitsgängen zugeordneten Temperierverfahren können selbstverständlich variiert werden. So kann die in der Prägeeinrichtung angedeutete Durchflusstemperierung auch in der Farbauftragswalze 13 des Druckwerks 10 verwendet werden. Erfindungsgemäß entscheidend ist, dass soweit erforderlich in den jeweiligen Arbeitsgängen die Viskosität durch entsprechende Temperierung optimiert wird.

Je nach eingesetztem Temperierungsverfahren ist es auch nicht unbedingt notwendig, die Verfließstrecke in einem Kasten anzuordnen. Die Verfließstrecke kann eventuell eingespart werden, wenn die Lackschicht nicht mit Hilfe eines Druckwerks, sondern mit flächig arbeitenden Auftragssystemen, die von vorneherein eine gleichmäßige Schicht gewährleisten, wie Rollcoater, Schlitzdüsen oder Lacksprühsystemen aufgebracht wird.

Ebenso ist die Erfindung nicht auf die Verwendung UV-härtbarer Lacke beschränkt. Es können beliebige andere Lacke, wie z. B. thermoplastische oder Mehrkomponentenlacke verwendet werden. Auch die Verwendung von lösungsmittelhaltigen Lacken, die Komponenten mit einer temperaturabhängigen Viskosität aufweisen, ist denkbar.

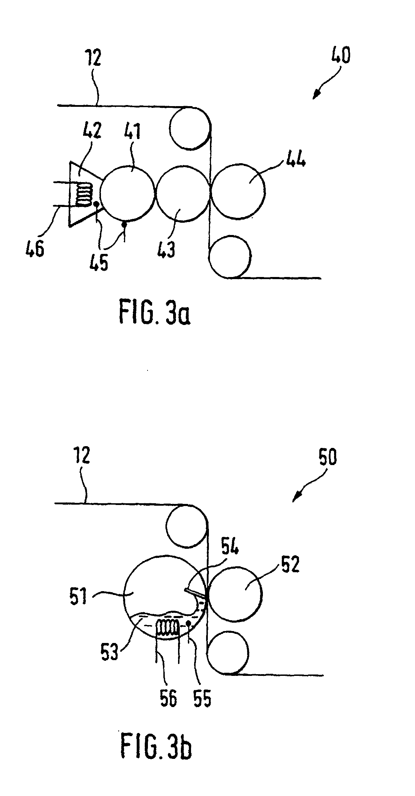

Statt eines Tiefdruckwerks können gemäß der Erfindung auch Flexodruckoder Siebdruckwerke eingesetzt werden, wie in den Figuren 3a und 3b dargestellt.

Fig. 3a zeigt ein Flexodruckwerk 40. Hier wird die Manteloberfläche einer Farbauftragswalze 41 über eine Farbkammer 42 eingefärbt und die Farbe anschließend auf einen Hochdruckzylinder 43, der das zu druckende Motiv trägt, übertragen. Im Bereich der Gegendruckwalze 44 wird die Farbschicht bzw. Lackschicht schließlich auf die Folienbahn 12 übertragen. Im Bereich der Farbauftragswalze 41 und der Farbkammer 42 sind ein oder mehrere Temperaturmessfühler 45 angeordnet, welche die Temperatur der Lackschicht kontrollieren und über eine nicht gezeigte Regeleinheit die Temperatur des Lacks in der Farbkammer 42 steuern. Das hierfür notwendige Heizaggregat 46 wird in der Fig. 3a durch eine Heizspirale angedeutet.

Fig. 3b zeigt ein Siebdruckwerk 50, welches im Wesentlichen aus einem Siebdruckzylinder 51 und einer Gegendruckwalze 52 besteht. Bei dem Siebdruckzylinder handelt es sich um ein Gewebematerial, welches nur im Bereich des zu übertragenen Druckbildes mit Öffnungen versehen ist. Im Inneren des Siebdruckzylinders 51 befindet sich die Farb- bzw. Lackschicht 53, welche mit Hilfe des Rakels 54 durch die Maschenöffnungen auf die Folienbahn 12 gedruckt wird. Der Messfühler 55 befindet sich hier im Bereich der Druckfarbe 53 im Inneren des Siebdruckzylinders 51 ebenso wie das Temperierungsaggregat 56, welches hier ebenfalls durch eine Heizspirale angedeutet ist.

Erfindungsgemäß muss bei jedem Arbeitsgang die Temperatur des verwendeten Lacksystems so eingestellt und konstant gehalten werden, dass sich die für diesen Arbeitsgang optimale Viskosität ergibt. Beim Aufbringen des Lacks im Siebdruck beispielsweise können je nach Lack mit Viskositäten von ca. 700 bis 1500 mPas optimale Ergebnisse erzielt werden. Bei der Aufbringung im Tiefdruck dagegen wird eine Viskosität von ca. 50 bis 150 mPas und im Flexodruck von ca. 100 bis 500 mPas für ein optimales Druckergebnis benötigt. Im Bereich der Verfließstrecke muß die Lackschicht besonders dünnflüssig sein, um eine gleichmäßige Verteilung der Lackschicht auf der gesamten Folie zu gewährleisten. Die benötigte Viskosität hängt zudem von der Länge der Verfließstrecke ab. Bei einer kurzen Verfließstrecke ist eine Viskosität von beispielsweise weniger als 100 mPas notwendig, wogegen bei einer langen Verfließstrecke einige 100 mPas nötig sein können. Während des Prägevorgangs schließlich muss die Viskosität des Lacks je nach Lacksystem zwischen 100 und 500 mPas liegen.

Der tatsächlich einzustellende Viskositätswert hängt nicht nur von dem durchzuführenden Arbeitsgang ab, sondern variiert auch sehr stark in Abhängigkeit vom eingesetzten Lack. Dies beruht darauf, dass jeder Lack unter Scherbeanspruchungen, wie sie in allen Arbeitsgängen auftreten, ein unterschiedliches rheologisches Verhalten zeigt. Einige Lacke werden durch Scherbeanspruchung zähflüssiger, andere dünnflüssiger. Dies bedeutet, dass für jeden Lack zuerst die für den jeweiligen Arbeitsgang optimale Viskosität bestimmt werden muss. Sobald diese ermittelt wurde, kann aus der Viskositäts-/Temperaturkurve die zugehörige einzustellende Temperatur abgelesen werden.

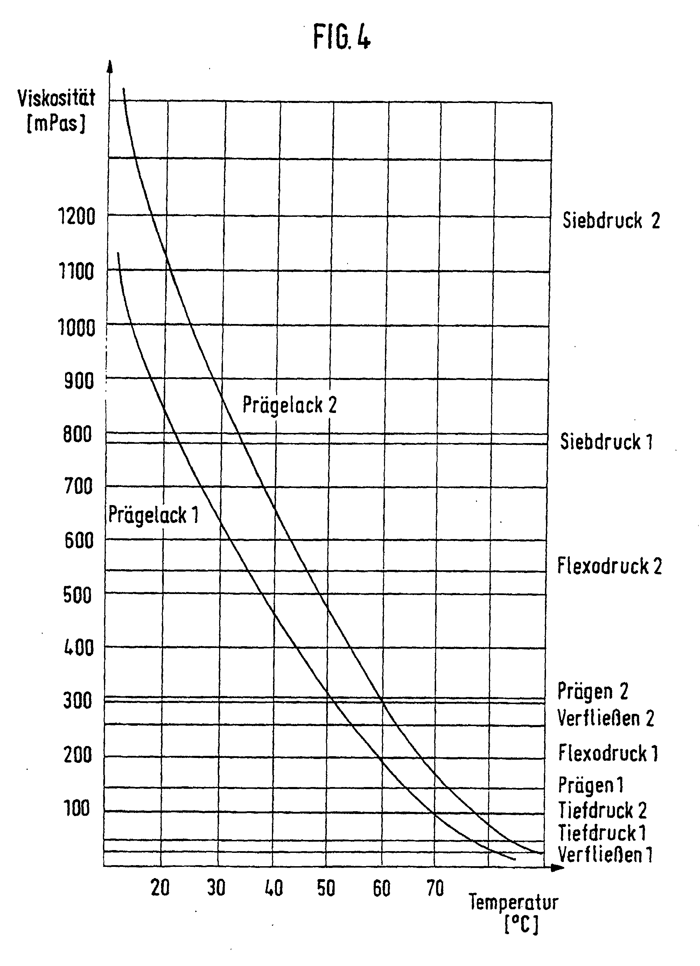

Fig. 4 zeigt die Viskositätskurven zweier unterschiedlicher Prägelacke 1, 2 in Abhängigkeit von der Temperatur. Ferner wurden die für den jeweiligen Prägelack und den jeweiligen Arbeitsgang optimalen Viskositäten eingezeichnet. Hieraus ergeben sich folgende Viskositäts- und Temperaturwerte, die für den jeweiligen Prägelack optimale Ergebnisse ermöglichen:

| Prägelack 1 | | |
|---|---|---|
| Arbeitsgang | optimale Viskosität [mPas] | einzustellende Temperatur [°C] |
| Tiefdruck | 50 | 76 |
| Flexodruck | 200 | 58 |
| Siebdruck | 780 | 23 |
| Verfließen | 25 | 80 |
| Prägen | 150 | 65 |

| Prägelack 2 | | |
|---|---|---|
| Arbeitsgang | optimale Viskosität [mPas] | einzustellende Temperatur [°C] |
| Tiefdruck | 98 | 77 |
| Flexodruck | 540 | 47 |
| Siebdruck | 1200 | 18 |
| Verfließen | 270 | 63 |
| Prägen | 310 | 59 |

Verwendet man den UV-härtbaren Prägelack 1 in der in Fig. 1 gezeigten Vorrichtung, so ergibt sich aus der obigen Tabelle, dass der Prägelack 1 im Tiefdruckwerk 10 auf einer Temperatur von ca. 76° C gehalten und für ein optimales Verfließen entlang der Verfließstrecke 20 weiter auf ca. 80° C erwärmt werden muss. Während des Prägevorgangs dagegen muss die Prägelacktemperatur auf ca. 65° C eingestellt werden. Gegenüber normaler Raumtemperatur wäre damit entgegen der in Fig. 1 gezeigten Durchflusskühlung 34 ebenfalls ein Heizaggregat notwendig. Da radikalisch härtbare UV-Lacke jedoch während des Prägevorgangs durch Beaufschlagung mit UV-Strahlung gehärtet werden und die UV-Lampe selbst auch Wärme zuführt und den Lack unter Umständen auf Temperaturen von ca. 130° C aufheizen kann, muss während des Prägevorgangs üblicherweise gekühlt werden. Bei der Verwendung kationisch härtender Lacke muss während des Prägevorgangs eher geheizt werden, wie bereits anhand von Fig. 2 erläutert, um die optimale Viskosität zu erreichen.

Bei der Verwendung des Prägelacks 2 ergeben sich entsprechend der Tabelle andere Temperaturwerte, aber auch andere Viskositätswerte. Dies liegt, wie bereits erläutert, an den unterschiedlich rheologischen Eigenschaften der Lacke unter Scherbeanspruchung. So liegt für den Prägelack 2 bei Verdrukkung im Tiefdruckverfahren die optimale Viskosität mit 98 mPas höher als beim Prägelack 1, die einzustellende Temperatur dagegen entspricht mit 77° C praktisch derjenigen für den Prägelack 1.

Die Temperierung erfolgt vorzugsweise rechnergesteuert, indem der oder die Temperaturmessfühler der jeweiligen Einrichtung die ermittelten Temperaturwerte an eine zentrale Recheneinheit weiterleiten, welche die Messwerte auswertet und mit den Sollwerten vergleicht. Je nachdem, ob die Messwerte über oder unter dem Sollwert liegen, muß die Heiz- bzw. Kühlleistung des Temperierungsaggregats angepasst werden.

## Patentansprüche

1. Verfahren zur Herstellung eines Folienmaterials, bei welchem eine Kunststorffolie mit einer Lackschicht versehen wird, die eine variable Viskosität aufweist und bei welchem anschließend in die Lackschicht eine Reliefstruk-, tur eingeprägt wird, **dadurch gekennzeichnet, dass** während des Aufbringens der Lackschicht und während des Prägevorgangs die Viskosität der Lackschicht auf einen vorbestimmten Wert eingestellt und während des jeweiligen Arbeitsganges konstant gehalten wird.

2. Verfahren nach Anspruch 1, **dadurch gekennzeichnet, dass** die Lackschicht eine temperaturabhängige Viskosität aufweist und die Viskosität im jeweiligen Arbeitsgang über die Temperatur eingestellt wird.

3. Verfahren nach Anspruch 1 oder 2, **dadurch gekennzeichnet, dass** die Temperatur der Lackschicht in jedem Arbeitsgang mit Hilfe eines Temperaturfühlers kontrolliert und über Heiz- oder Kühlaggregate geregelt wird.

4. Verfahren nach einem der Ansprüche 1 bis 3, **dadurch gekennzeichnet, dass** die Lackschicht auf die Kunststofffolie, vorzugsweise im Sieb-, Tiefoder Flexodruck, aufgedruckt wird und zumindest Teile des Druckwerks während des Druckvorgangs geheizt werden.

5. Verfahren nach einem der Ansprüche 1 bis 4, **dadurch gekennzeichnet, dass** die Lackschicht nach dem Aufbringen auf die Kunststofffolie gleichmäßig über deren Oberfläche verteilt wird.

6. Verfahren nach Anspruch 5, **dadurch gekennzeichnet, dass** das Verteilen der Lackschicht durch Verfließenlassen erfolgt.

7. Verfahren nach Anspruch 5 oder 6, **dadurch gekennzeichnet, dass** die Lackschicht während des Verteilens, vorzugsweise mittels IR-Strahlung, geheizt wird.

8. Verfahren nach einem der Ansprüche 1 bis 7, **dadurch gekennzeichnet, dass** die Lackschicht während des Prägevorgangs gekühlt wird.

9. Verfahren nach einem der Ansprüche 1 bis 8, **dadurch gekennzeichnet, dass** ein radikalisch oder katonisch härtender Lack verwendet wird.

10. Vorrichtung zur Herstellung eines Polienmaterials, welche eine Einrichtung zum Aufbringen einer Lackschicht variabler Viskosität auf eine Kunststofffolie sowie eine Einrichtung zum Prägen der Lackschicht aufweist, **dadurch gekennzeichnet, dass** jede der Einrichtungen eine Steuereinheit aufweist, welche die Viskosität der Lackschicht auf einen vorbestimmten Wert einstellt und während des jeweiligen Arbeitsganges konstant hält.

11. Vorrichtung nach Anspruch 10, **dadurch gekennzeichnet, dass** die Steuereinheit aus einem Temperaturfühler und einem Heiz- oder Kühlaggregat besteht.

12. Vorrichtung nach Anspruch 10 oder 11, **dadurch gekennzeichnet, dass** die Einrichtung zum Aufbringen der Lackschicht aus einem Druckwerk, vorzugsweise einem Tief-, Sieb- oder Flexodruckwerk besteht.

13. Vorrichtung nach Anspruch 12, **dadurch gekennzeichnet, dass** das Druckwerk ein Heizaggregat aufweist.

14. Vorrichtung nach einem der Ansprüche 10 bis 13, **dadurch gekennzeichnet, dass** die Einrichtung zum Prägen der Lackschicht eine Prägewalze ist, deren Oberfläche vorzugsweise eine Beugungsstruktur in Form einer Reliefstruktur aufweist.

15. Vorrichtung nach Anspruch 14, **dadurch gekennzeichnet, dass** die Prägewalze ein Temperieraggregat aufweist, welches vorzugsweise aus einem Flüssigkeitsdurchflusssystem besteht.

16. Vorrichtung nach einem der Ansprüche 10 bis 15, **dadurch gekennzeichnet, dass** zwischen der Einrichtung zum Aufbringen und der Einrichtung zum Prägen der Lackschicht eine Transportstrecke vorbestimmter Länge angeordnet ist, entlang welcher die Lackschicht gleichmäßig auf der Oberfläche der Kunststofffolie verteilt wird.

17. Vorrichtung nach Anspruch 16, **dadurch gekennzeichnet, dass** die Transportstrecke eine Steuereinheit, bestehend aus einem Temperaturfühler und einem Heizaggregat, vorzugsweise einem IR-Strahler, aufweist.

18. Verwendung des nach einem der Ansprüche 1 bis 9 hergestellten Folienmaterials für die Herstellung von Sicherheitselementen.

19. Verwendung des nach einem der Ansprüche 1 bis 9 hergestellten Folienmaterials für die Herstellung von Sicherheitsdokumenten.

## Claims

1. A method for producing a foil material wherein a plastic foil is provided with a lacquer layer having variable viscosity, and a relief structure is then embossed into the lacquer layer, **characterized in that** the viscosity of the lacquer layer is adjusted to a predetermined value during application of the lacquer layer and during the embossing process and kept constant during the particular phase of operation.

2. A method according to claim 1, **characterized in that** the lacquer layer has temperature-dependent viscosity and the viscosity is adjusted via the temperature in the particular phase of operation.

3. A method according to claim 1 or 2, **characterized in that** the temperature of the lacquer layer is checked with the aid of a temperature sensor and regulated via heating or cooling assemblies in each phase of operation.

4. A method according to any of claims 1 to 3, **characterized in that** the lacquer layer is printed on the plastic foil, preferably by screen printing, gravure printing or flexography, and at least parts of the printing unit are heated during the printing operation.

5. A method according to any of claims 1 to 4, **characterized in that** after application to the plastic foil the lacquer layer is distributed uniformly over the surface thereof.

6. A method according to claim 5, **characterized in that** the lacquer layer is distributed by being allowed to spread.

7. A method according to claim 5 or 6, **characterized in that** the lacquer layer is heated, preferably by IR radiation, during distribution.

8. A method according to any of claims 1 to 7, **characterized in that** the lacquer layer is cooled during the embossing process.

9. A method according to any of claims 1 to 8, **characterized in that** a radically or cationically curing lacquer is used.

10. An apparatus for producing a foil material having a device for applying a lacquer layer of variable viscosity to a plastic foil and a device for embossing the lacquer layer, **characterized in that** each of the devices has a control unit which adadjusts the viscosity of the lacquer layer to a predetermined value and keeps it constant during the particular phase of operation.

11. An apparatus according to claim 10, **characterized in that** the control unit consists of a temperature sensor and a heating or cooling assembly.

12. An apparatus according to claim 10 or 11, **characterized in that** the device for applying the lacquer layer consists of a printing unit, preferably a gravure, screen or flexographic printing unit.

13. An apparatus according to claim 12, **characterized in that** the printing unit has a heating assembly.

14. An apparatus according to any of claims 10 to 13, **characterized in that** the device for embossing the lacquer layer is an embossing roll whose surface preferably has a diffraction structure in the form of a relief structure.

15. An apparatus according to claim 14, **characterized in that** the embossing roll has a tempering assembly that preferably consists of a liquid flow system.

16. An apparatus according to any of claims 10 to 15, **characterized in that** between the device for applying the lacquer layer and the embossing device there is a transport path of predetermined length along which the lacquer layer is distributed uniformly over the surface of the plastic foil.

17. An apparatus according to claim 16, **characterized in that** the transport path has a control unit consisting of a temperature sensor and a heating assembly, preferably an IR radiator.

18. Use of the foil material produced according to any of claims 1 to 9 for producing security devices.

19. Use of the foil material produced according to any of claims 1 to 9 for producing security documents.

## Revendications

1. Procédé de fabrication d'un matériau en feuille, dans lequel une feuille de matière plastique est pourvue d'une couche de laque, qui présente une viscosité variable, et dans lequel on imprime ensuite une structure en relief dans la couche de laque, **caractérisé en ce que** pendant l'application de la couche de laque et pendant l'opération d'impression, on règle la viscosité de la couche de laque à une valeur prédéterminée et on la maintient constante pendant chaque opération.

2. Procédé selon la revendication 1, **caractérisé en ce que** la couche de laque présente une viscosité dépendante de la température et la viscosité est réglée au moyen de la température pendant chaque opération.

3. Procédé selon la revendication 1 ou 2, **caractérisé en ce que** la température de la couche de laque est contrôlée pendant chaque opération, à l'aide d'une sonde de température et est réglée au moyen d'unités de chauffage ou de refroidissement.

4. Procédé selon l'une des revendications 1 à 3, **caractérisé en ce que** la couche de laque est imprimée sur la feuille en matière plastique, de préférence par sérigraphie, par héliogravure ou par flexographie et **en ce qu'**au moins certaines parties de l'élément d'impression sont chauffées pendant l'opération d'impression.

5. Procédé selon l'une des revendications 1 à 4, **caractérisé en ce que** la couche de laque est répartie uniformément sur la surface après son application sur la feuille en matière plastique.

6. Procédé selon la revendication 5, **caractérisé en ce que** la répartition de la couche de laque est effectuée par étalement.

7. Procédé selon la revendication 5 ou la revendication 6, **caractérisé en ce que** la couche de laque est chauffée pendant la répartition, de préférence au moyen d'un rayonnement infra-rouge.

8. Procédé selon l'une des revendications 1 à 7, **caractérisé en ce que** la couche de laque est refroidie pendant l'opération d'impression.

9. Procédé selon l'une des revendications 1 à 8, **caractérisé en ce qu'**on utilise une laque à réticulation radicalaire ou cationique.

10. Dispositif pour la fabrication d'un matériau en feuille, qui présente un appareil pour l'application d'une couche de laque de viscosité variable sur une feuille en matière plastique, ainsi qu'un appareil pour réaliser une impression sur la couche de laque, **caractérisé en ce que** chacun des appareils présente une unité de réglage, laquelle règle la viscosité de la couche de laque à une valeur prédéterminée et la maintient constante pendant chaque opération.

11. Dispositif selon la revendication 10, **caractérisé en ce que** l'unité de réglage consiste en une sonde de température et une unité de chauffage ou de refroidissement.

12. Dispositif selon la revendication 10 ou 11, **caractérisé en ce que** l'appareil pour l'application de la couche de laque consiste en une unité d'impression, de préférence un appareil d'héliogravure, un appareil de sérigraphie ou un appareil de flexographie.

13. Dispositif selon la revendication 12, **caractérisé en ce que** l'unité d'impression présente une unité de chauffage.

14. Dispositif selon l'une des revendications 10 à 13, **caractérisé en ce que** l'appareil pour l'impression sur la couche de laque est un rouleau d'impression, dont la surface présente de préférence une structure de diffraction sous la forme d'une structure en relief.

15. Dispositif selon la revendication 14, **caractérisé en ce que** le rouleau d'impression présente une unité de chauffage, laquelle consiste de préférence en un système à circulation de liquide.

16. Dispositif selon l'une des revendications 10 à 15, **caractérisé en ce que**, entre l'appareil pour l'application et l'appareil pour l'impression sur la couche de laque, est disposé un tronçon de transport d'une longueur prédéterminée, le long duquel la couche de laque est répartie uniformément sur la surface de la feuille en plastique.

17. Dispositif selon la revendication 16, **caractérisé en ce que** le tronçon de transport présente une unité de réglage consistant en une sonde de température et une unité de chauffage, de préférence un émetteur d'IR.

18. Utilisation du matériau fabriqué selon l'une des revendications 1 à 9 pour la fabrication d'éléments de sécurité.

19. Utilisation du matériau en feuille selon l'une des revendications 1 à 9 pour la fabrication de documents de sécurité.
